# EUROPEAN PATENT APPLICATION

(11) **EP 2 417 887 A1**
(43) Date of publication of application: **15.02.2012**
(21) Application number: 10761579.1
(22) Date of filing: 19.03.2010
(51) Int. Cl.: A47L 9/12, A47L 9/14

(54) **PAPER BAG FILTER AND ELECTRIC TOOL WITH FUNCTION OF SUCKING DUST**

(30) Priority: 10.04.2009 JP 2009096310
(71) Applicant: Makita Corporation, Anjo-shi, Aichi 446-8502 (JP)
(72) Inventor: MACHIDA Yoshitaka, Anjo-shi Aichi 446-8502 (JP)
(74) Representative: Kramer - Barske - Schmidtchen
(86) International application number: PCT/JP2010/054780
(87) International publication number: WO 2010/116879

(57) **Abstract**

PROBLEM

To provide a paper pack filter which can ensure a larger surface area for the same volume, simplify a folding operation upon replacement of the filter or the like, and require a minimum adhesion process.

SOLUTION

A paper pack filter 1 includes a paper filter mounting board 2 having a through-opening at a center part thereof and a paper filter 5 shaped like a tube having a bottom and an opening adhered to one surface of the paper filter mounting board 2, and the paper filter 5 is folded into an angular tube to form a bellows such that mountain fold portions 6 and valley fold portions 7 appear alternately at each side surface and the mountain fold portions 6 and the valley fold portions 7 shift alternately in a zig-zag manner between adjacent side surfaces.

## Description

### TECHNICAL FIELD

The present invention relates to a paper pack filter for use with an electric power tool with dust collection function and the like, and also to an electric power tool with dust collection function which employs the paper pack filter.

### BACKGROUND ART

In an electric power tool such as a hammer drill, a dust collector may be provided by which dust particles generated during a hole-making operation is sucked and collected at a position near the tool. This electric power tool with dust collection function is equipped with a flexible hose connected to a front end side of the tool and an intake fan for sucking air through the flexible hose. A paper pack filter is set in a dust collecting unit provided at an upstream of the intake fan so that dust particles guided into the dust collecting unit are collected by the paper pack filter. This paper pack filter clogs up in a short period of time and the dust collection function deteriorates if the paper pack filter is simply formed into a bag shape. Therefore, an attempt is made to provide increased surface area by folding the paper pack filter into a bellows or the like. For example, Patent Document 1 discloses a paper pack filter that is folded by a so-called Miura-fold method and used with a cleaner.

### CITATION LIST

### PATENT LITERATURES

[Patent Document 1] Japanese Laid-open Patent Application, Publication No. 2005-287711

### SUMMARY OF INVENTION

### TECHNICAL PROBLEM

However, although a paper pack filter folded by Miura-fold method can increase the surface area, it is difficult to fold the filter smoothly and replacement of the filter often takes time. Further, because a pair of folded upper and lower filter papers are adhered together at three sides into a bag-shape, adhesion is time consuming and the manufacturing cost increases.

In view of this, the present invention seeks to provide a paper pack filter and an electric power tool with dust collection function, which can ensure a larger surface area for the same volume, simplify a folding operation upon replacement of the filter or the like, and require a minimum adhesion process to thereby decrease the manufacturing cost.

### SOLUTION TO PROBLEM

In order to achieve the above object, the invention in claim 1 is a paper pack filter comprising a paper filter mounting board having a through-opening at a center part thereof and a paper filter shaped like a tube having a bottom and an opening adhered to one surface of the paper filter mounting board, the paper filter being folded into an angular tube to form a bellows such that mountain fold portions and valley fold portions appear alternately at each side surface and the mountain fold portions and the valley fold portions shift alternately in a zig-zag manner between adjacent side surfaces.
In order to achieve the above object, the invention in claim 3 is a paper pack filter comprising a paper filter mounting board having a through-opening at a center part thereof and a paper filter shaped like a tube having a bottom and an opening adhered to one surface of the paper filter mounting board, the paper filter being folded into an angular tube to form a bellows such that mountain fold portions and valley fold portions appear alternately at each side surface with the mountain fold portions between adjacent side surfaces being arranged in line in a perimetrical direction and the valley fold portions between the adjacent side surface being arranged in line in the perimetrical direction, and that a first side surface in which each mountain fold portion and each valley fold portion have the same length and a second side surface in which each valley fold portion is shorter than each mountain fold portion are alternately adj acent.
In order to achieve the above object, the invention in claim 7 is an electric power tool with dust collection function further comprising a motor, an intake fan for collecting dust particles configured to rotate by rotation of an output shaft of the motor and a dust collecting unit configured to accommodate a paper pack filter according to claim 1 or claim 3 and to store dust particles collected by the intake fan.

### ADVANTAGEOUS EFFECTS OF INVENTION

According to the inventions in claims 1 and 3, not only a larger surface area can be ensured for the same volume, but also a folding operation upon replacement of the paper pack filter or the like can be simply performed. Further, because the paper pack filter is made by folding a sheet of paper into an angular tube, the minimum adhesion process is required and the manufacturing cost can be decreased.
According to the invention in claim 7, replacement of the paper pack filter can be easily performed, and dust collection can be carried out while the paper pack filter is kept in an optimal shape during its use. Further, the paper filter is capable of expanding or contracting by the passage of air to provide a dust-drop function. Therefore, the paper pack filter is less likely to clog up and the replacement frequency can be decreased.

### BRIEF DESCRIPTION OF DRAWINGS

FIG. 1 is a perspective view of a paper pack filter according to a first embodiment.
FIG. 2 is an explanatory view of the paper pack filter according to the first embodiment and comprises: (A) a top view, (B) a front view, and (C) a longitudinal sectional view.
FIG. 3 is a development of a paper filter according to the first embodiment.
FIG. 4 is an explanatory view of a dust collecting hammer drill.
FIG. 5 is a perspective view of a paper pack filter according to a second embodiment.
FIG. 6 is an explanatory view of the paper pack filter according to the second embodiment and comprises: (A) a top view, and (B) a side view.

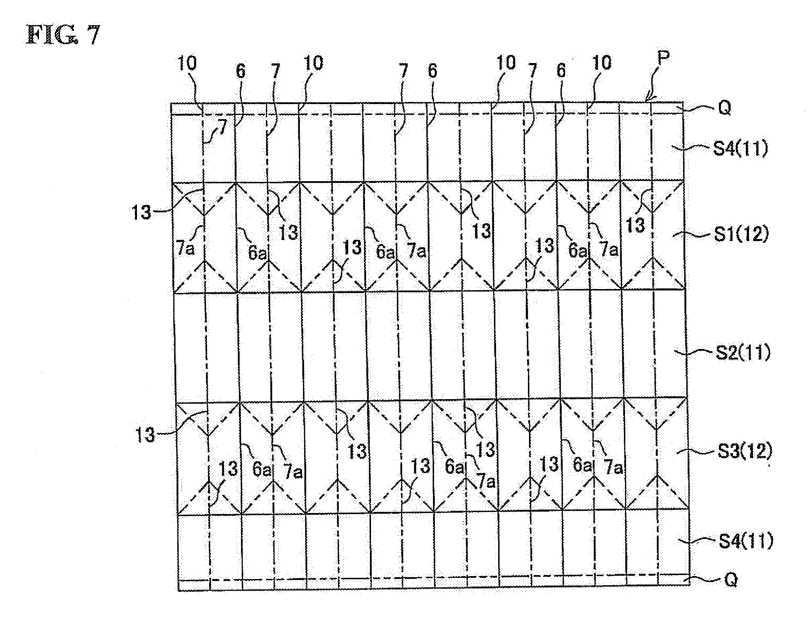

FIG. 7 is a development of a paper filter according to the second embodiment.

### DESCRIPTION OF EMBODIMENTS

Embodiments of the present invention will be described below with reference to the drawings.

### FIRST EMBODIMENT

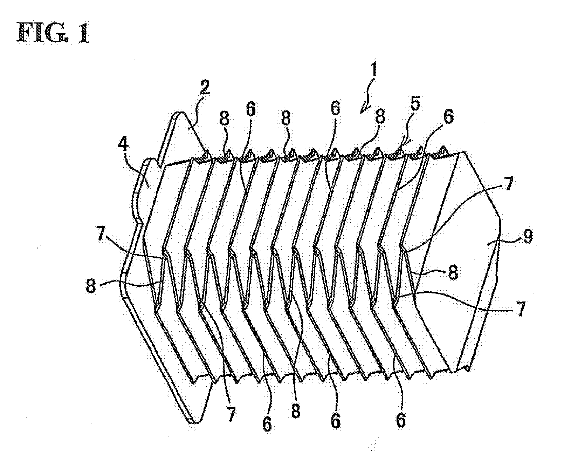

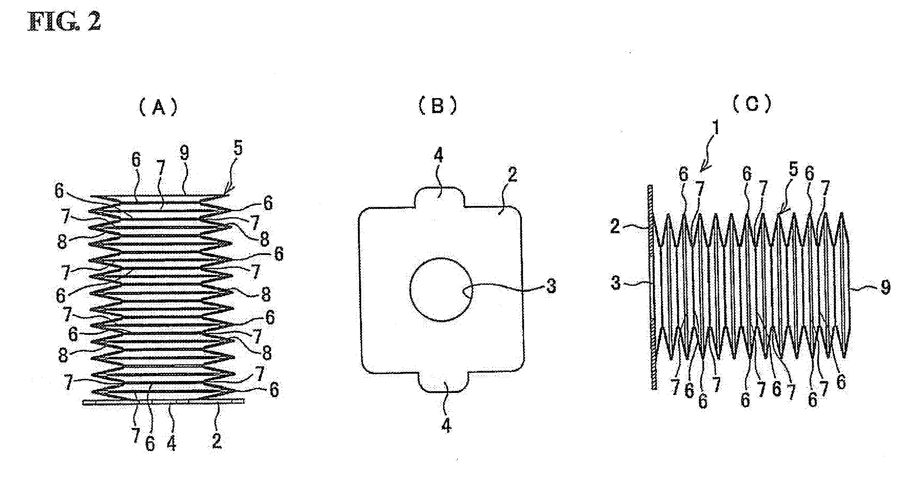

A paper pack filter 1 as shown in FIGS. 1 and 2 is made by adhering an opening of a paper filter 5 to one surface of a rectangular-shaped paper filter mounting board 2 having a through-opening 3 at a center part thereof and protrusions 4, 4 at upper and lower ends thereof. The paper filter 5 is shaped like a rectangular tube having a bottom.
The paper filter 5 is folded into a bellows-like rectangular tube and capable of expanding or contracting in an axial direction thereof. The bellows is folded such that mountain fold portions 6 and valley fold portions 7 appear alternately at each side surface and the mountain fold portions 6 and the valley fold portions 7 shift alternately in a zig-zag manner between adjacent side surfaces. Slanted mountain fold portions 8 are formed at corners of the tube to alternately connect the mountain fold portions 6 between adjacent side surfaces.

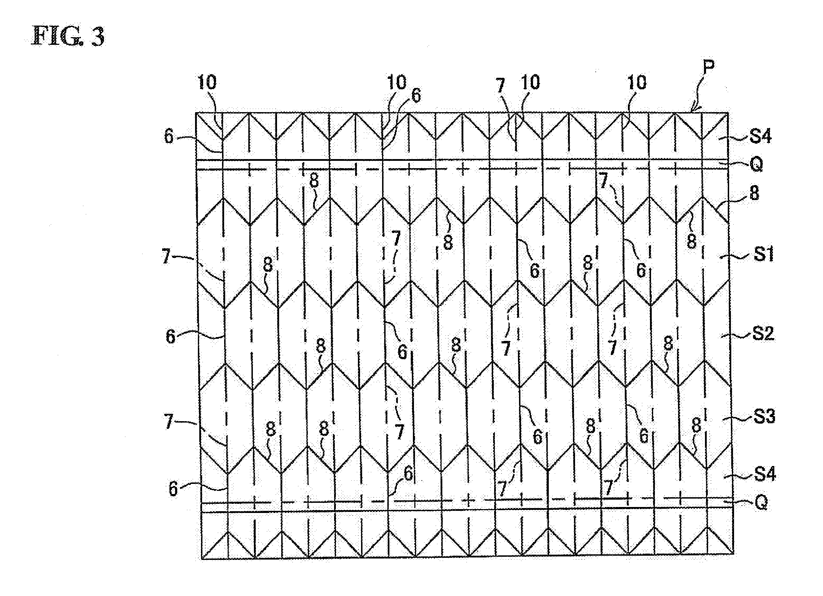

As best seen in FIG. 3, the paper pack filter 5 is made from a sheet of rectangular paper P in which folding lines 10 are longitudinally arranged at equally-spaced intervals. In one folding line 10, a solid line and a dashed line appear alternately. The solid line is a mountain fold (to be a mountain fold portion 6) and the dashed line is a valley fold (to be a valley fold portion 7). The mountain fold (mountain fold portion 6) and the valley fold (valley fold portion 7) appear alternately between adjacent folding lines 10. Further, in adjacent folding lines 10, a boundary between a mountain fold and a valley fold is connected to an adjacent boundary by a solid line which is to be a mountain fold *(i.e.,* a slanted mountain fold portion 8). The sheet of paper P is folded along these folding lines into a rectangular tube having non-connected ends, in which longitudinal parts S1-S4 each partitioned by the zig-zag connected slanted mountain fold portions 8 form side surfaces.

When the side surfaces S4 on both ends in a lateral direction of the sheet of paper P are overlapped one on another and adhered together at sticking tabs Q, a bellows-like rectangular tube is obtained, and one of the openings of the rectangular tube is closed by adhering a bottom 9 to the opening to thereby provide a paper filter 5. The paper pack filter 1 as shown in FIG. 1 is produced by adhering the opening of the paper filter 5 to one surface of the paper filter mounting board 2 such that the through-opening 3 is positioned in the center of the opening of the paper filter 5. Because the paper pack filter 1 has the paper filter 5 in the shape of a bellows-like rectangular tube, the expansion and the contraction of the paper pack filter 1 can be smoothly performed.

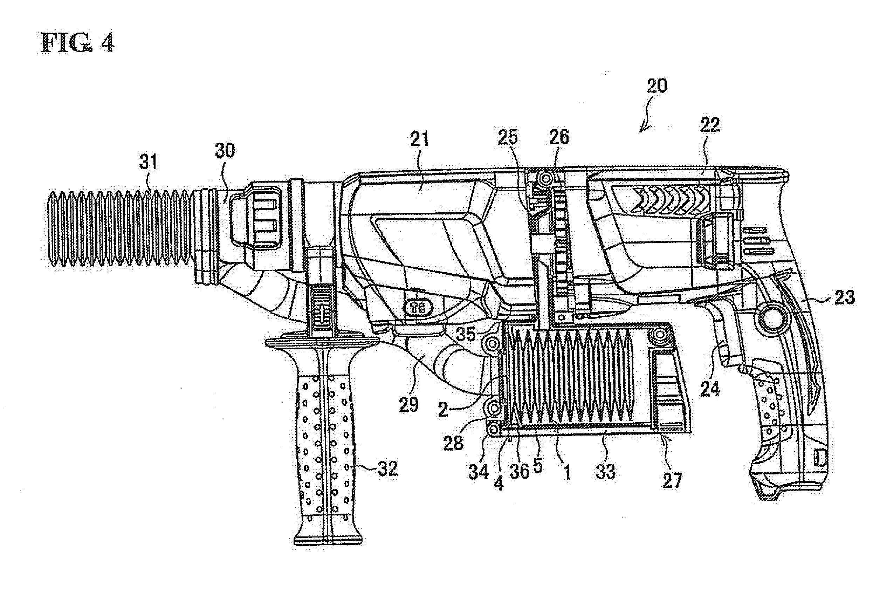

The paper pack filter 1 is used with an electric power tool with dust collection function such as a dust collecting hammer drill as shown in FIG. 4. The dust collecting hammer drill 20 is shaped like an inverted L-shape (pistol shape) as a whole. A housing of the collecting hammer drill 20 is divided into a front housing 21 (lefthand side of FIG. 4 is the front side) for accommodating a rotary/impact mechanism (not shown) and a rear housing 22 for accommodating a motor (not shown). A handle 23 is formed at the rear end of the rear housing 22 and a trigger 24 protrudes forward from the handle 23.

An accommodating room 25 is defined between the front housing 21 and the rear housing 22. An intake fan 26 which is connected to an output shaft of the motor and rotatable together with the motor is accommodated in the accommodating room 25. In the meantime, a dust collecting box 27 which is a dust collecting unit in communication with the accommodating room 25 is joined at lower ends of the front housing 21 and the rear housing 22. The dust collecting box 27 is shaped like a rectangular box having a connecting port 28 for a flexible hose 29 at its front surface. The flexible hose 29 is connected to a bellows-like dust collecting hose 31 which covers a bit (not shown) attached to a bit-mounting unit 30 at the front end of the front housing 21. Reference numeral 32 indicates a side handle.

Further, at a lower surface of the dust collecting box 27, there is provided a lid member 33 which is openable and closable around a shaft 34 arranged at the front end thereof. Engagement units 35, 36 are formed in an inner surface of the dust collecting box 27 at a spot near the front end thereof and on a proximal side of the lid member 33, respectively, and the protrusions 4 provided on the paper filter mounting board 2 of the paper pack filter 1 are engaged with the engagement units 35,36.
Therefore, when one of the protrusions 4 on the paper filter mounting board 2 is engaged with the upper-side engagement unit 35 and thereafter the lid member 33 is closed so that the other protrusion 4 comes into engagement with the engagement unit 36 of the lid member 33, while the paper pack filter 1 is kept folded in an axial direction, the paper pack filter 1 is set such that the paper filter mounting board 2 is positioned at a front side in the dust collecting box 27 and the through-opening 3 is arranged opposite the connecting port 28. Because the paper filter 5 can be simply folded and contracted in the axial direction, the installation of the paper pack filter 1 can be smoothly performed. After the installation of the paper pack filter 1, the paper filter 5 automatically expands to maintain an optimal shape within the dust collecting box 27.

When the trigger 24 of the dust collecting hammer drill 20 is depressed to actuate the motor, the rotary/impact mechanism operates and in a selected operating mode applies a rotary force and/or an impact force to the bit to thereby perform a drilling operation and the like.
When the intake fan 26 rotates as the motor is actuated, air is drawn from the dust collecting hose 31, passing through the flexible hose 29 and into the dust collecting box 27. Thereafter, the air passes through the paper filter 5 of the paper pack filter 1 into the accommodating room 25 of the dust collecting hammer drill 20, and discharged out from the rear housing 22.

This flow of air causes dust particles generated during the work to move with the air from the dust collecting hose 31 into the dust collecting box 27 through the flexible hose 29. The dust particles are arrested by the paper filter 5 of the paper pack filter 1 and stored in the paper filter 5. During this time, because the air passing through the paper filter 5 causes the paper filter 5 to be expanded or contracted, dust particles are less likely to adhere to the inner surface of the paper filter 5. Even if dust particles adhere to the inner surface of the paper filter 5, they tend to peel off from the inner surface because of the repeated expansion and contraction movements of the paper filter 5. Accordingly, the paper filter 5 is less likely to clog up.

When the paper pack filter 1 needs to be replaced with a new one, for example, because the filter is full of dusts particles, the lid member 33 is opened as described above and the paper filter mounting board 2 is pulled out from the engagement units 35, 36. This allows the paper pack filter 1 to be taken out from the dust collecting box 27. The above process should be carried out for installation of the new paper pack filter 1.

As described previously, the paper filter 5 is folded into an angular tube to form a bellows such that the mountain fold portions 6 and the valley fold portions 7 appear alternately at each side surface and the mountain fold portions 6 and the valley fold portions 7 shift alternately in a zig-zag manner between adjacent side surfaces. Therefore, according to the paper pack filter 1 in the first embodiment, not only a larger surface area can be ensured for the same volume, but also a folding operation upon replacement of the paper pack filter 1 or the like can be simply performed. Further, because the paper pack filter 1 is made by folding a sheet of paper into an angular tube and the minimum adhesion process is required, the manufacturing cost can be decreased.
According to the dust collecting hammer drill 20 in the above embodiment, the paper pack filter 1 is installed in the dust collecting box 27. Therefore, replacement of the paper pack filter 1 can be easily performed, and dust collection can be carried out while the paper pack filter 1 is kept in an optimal shape during its use. Further, the paper filter 5 is capable of expanding or contracting by the passage of air to provide a dust-drop function, so that the paper pack filter 1 is less likely to clog up and the replacement frequency can be decreased.

In the above first embodiment, the paper filter 5 is produced by separately adhering the bottom 9 to the paper P. However, the bottom may be previously connected to one side of the opening of the paper for the purpose of reducing the adhesion area.
Further, although the paper filter 5 is shaped like a rectangular tube in the above first embodiment, the angle of the slanted mountain fold portions 8 may vary to increase the number of side surfaces, so that the angular tube such as a hexagonal or octagonal tube may be obtained.

### SECOND EMBODIMENT

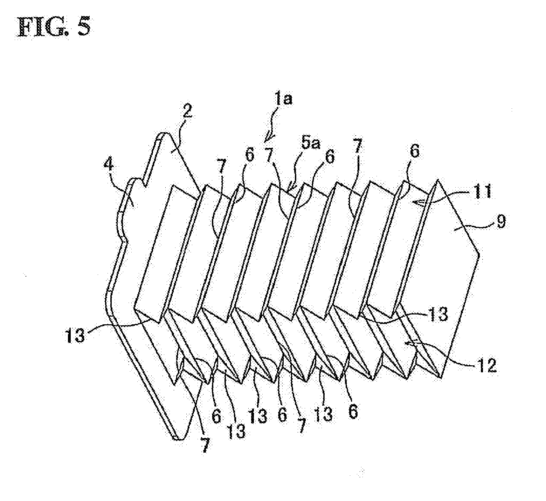

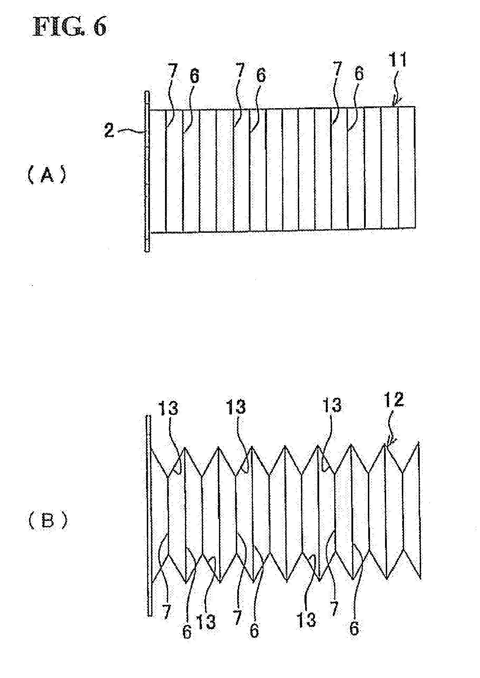

Next, another embodiment of the paper pack filter will be explained. The constituent parts same as those of the first embodiment 1 are denoted by the same reference numerals, and detailed description thereof will be omitted.
In a paper pack filter 1a as shown in FIG. 5, a paper filter 5a is also folded into a bellows-like rectangular tube and capable of expanding or contracting in an axial direction thereof. However, the bellows is folded such that the mountain fold portions 6 and the valley fold portions 7 are formed alternately at each side surface and they are arranged in line in a perimetrical direction. As shown in FIG. 6, a side surface 11 (see FIG. 6(A)) in which each mountain fold portion 6 and each valley fold portion 7 have the same length and a side surface 12 (see FIG. 6(B)) in which each valley fold portion 7 is shorter than each mountain fold portion 6 are formed alternately to one another. Further, folding portions 13 are formed and folded between adjacent side surfaces 11, 12 such that they alternately connect ends of the mountain fold portions 6 and the valley fold portions 7 in the side surface 11 in a zig-zag manner and protrude toward both ends of the valley fold portions 7 in the side surface 12.

As best seen in FIG .7, the paper filter 5a is also made from a sheet of rectangular paper P in which folding lines 10 are longitudinally arranged at equally-spaced intervals such that if a solid line is a mountain fold (to be a mountain fold portion 6) and a dashed line is a valley fold (to be a valley fold portion 7), the solid line and the dashed line appear alternately, and an area that is to be a boundary between the side surfaces 11, 12 is set as a longitudinal solid line. Both lateral ends of the paper P become sticking tabs Q.
Further, at both lateral ends of a area that is to be a side surface 12, ends of longer mountain fold portions 6a and ends of shorter mountain fold portions 7a are connected by dashed lines each tilted 45 degrees from the folding lines 10 in a zig-zag manner, and ends of shorter valley fold portions 7a and ends of valley fold portions 7 in an adjacent side surface 11 are connected by solid lines at which folding portions 13 are formed.
Therefore, when the sheet of paper P is folded along these folding lines, a rectangular tube having non-connected ends can be obtained, in which longitudinal parts S1-S4 form corresponding side surfaces 11, 12.

When the side surfaces S4 on both ends in the lateral direction of the sheet of paper P are overlapped one on another and adhered together at the sticking tabs Q, a bellows-like rectangular tube is obtained, and one of the openings of the rectangular tube is closed by adhering a bottom 9 to the opening to thereby provide a paper filter 5a. The paper pack filter 1a as shown in FIG. 5 is produced by adhering the opening of the paper filter 5a to one surface of the paper filter mounting board 2 such that the through-opening 3 is positioned in the center of the opening of the paper filter 5a. Because the paper pack filter 1a also has the paper filter 5a in the shape of a bellows-like rectangular tube, the expansion and the contraction of the paper pack filter 1 can be smoothly performed.

As described previously, the paper filter 5a is folded into an angular tube to form a bellows such that the mountain fold portions 6 and the valley fold portions 7 are formed alternately at each side surface 11, 12 and they are arranged in line in the perimetrical direction between adjacent side surfaces 11, 12, and that the side surface 11 in which each mountain fold portion 6 and each valley fold portion 7 have the same length and the side surface 12 in which each valley fold portion 7 is shorter than each mountain fold portion 6 are formed alternately to one another. Therefore, according to the paper pack filter 1a in the second embodiment, not only a larger surface area can be ensured for the same volume, but also a folding operation upon replacement of the paper pack filter 1a or the like can be simply performed. Further, because the paper pack filter 1a is made by folding a sheet of paper into an angular tube and the minimum adhesion process is required, the manufacturing cost can be decreased.
According to this embodiment, it is also possible to integrally provide the bottom 9 and the paper filter. Further, the angular tube may be a hexagonal or octagonal tube, in which the angle of the valley fold portions of the folding portions is changed.

As an electric power tool with dust collection function, the paper pack filter may be adopted not only for an integral type as with the above embodiment in which the intake fan is disposed in the electric power tool to provide a dust collection function but for a separate type in which the intake fan is disposed in the dust collecting box. Of course, design variation of the attachment structure for the dust collecting box may be possible, where appropriate; for example, the protrusions of the paper filter mounting board may be omitted and a groove into which the paper filter mounting board is fitted may be provided instead.
Use of the paper pack filter according to the present invention is not limited to an electric power tool with dust collection function. For example, the paper pack filter may be adopted for an electric power tool without dust collection function such as a circular saw, in which a discrete dust bag is optionally attached to the discharge nozzle for dust particles on the main body housing, with the paper pack filter being installed within the dust bag.

### REFERENCE SIGNS LIST

1, 1a -- PAPER PACK FILTER, 2 -- PAPER FILTER MOUNTING BOARD, 3 -- THROUGH-OPENING, 4 -- PROTRUSION, 5, 5a -- PAPER FILTER, 6MOUNTAIN FOLD PORTION, 7 -- VALLEY FOLD PORTION, 8 -- SLANTED MOUNTAIN FOLD PORTION, 9 -- BOTTOM, 10 -- FOLDING LINE, 11, 12 -- SIDE SURFACE, 13 -- FOLDING PORTION, 20 -- DUST COLLECTING HAMMER DRILL, 21 -- FRONT HOUSING, 22 -- REAR HOUSING, 25ACCOMMODATING ROOM, 26 -- INTAKE FAN, 27 -- DUST COLLECTING BOX, 28 -- CONNECTING PORT, 29 -- FLEXIBLE HOSE, 33 -- LID MEMBER, 35,36ENGAGEMENT UNIT, P -- PAPER, S1-S4 --SIDE SURFACE, Q -- STICKING TAB

## Claims

1. A paper pack filter comprising:
a paper filter mounting board having a through-opening at a center part thereof; and
a paper filter shaped like a tube having a bottom and an opening adhered to one surface of the paper filter mounting board, the paper filter being folded into an angular tube to form a bellows such that mountain fold portions and valley fold portions appear alternately at each side surface and the mountain fold portions and the valley fold portions shift alternately in a zig-zag manner between adjacent side surfaces.

2. The paper pack filter according to claim 1, wherein slanted mountain fold portions are formed at corners of the angular tube to alternately connect the mountain fold portions between adjacent side surfaces.

3. A paper pack filter comprising:
a paper filter mounting board having a through-opening at a center part thereof; and
a paper filter shaped like a tube having a bottom and an opening adhered to one surface of the paper filter mounting board, the paper filter being folded into an angular tube to form a bellows such that mountain fold portions and valley fold portions appear alternately at each side surface with the mountain fold portions between adjacent side surfaces being arranged in line in a perimetrical direction and the valley fold portions between the adjacent side surface being arranged in line in the parametrical direction, and that a first side surface in which each mountain fold portion and each valley fold portion have the same length and a second side surface in which each valley fold portion is shorter than each mountain fold portion are alternately adj acent.

4. The paper pack filter according to claim 3, wherein folding portions are formed between adjacent side surfaces such that they alternately connect ends of the mountain fold portions and the valley fold portions in the first side surface and protrude toward both ends of the valley fold portions in the second side surface.

5. The paper pack filter according to claim 1 or 3, wherein the paper filter is made by folding a sheet of paper into a rectangular tube having non-connected ends, adhering the ends together to form a connected rectangular tube, and adhering a bottom to one of openings formed on both sides of the connected rectangular tube.

6. The paper pack filter according to claim 1 or 3, wherein the paper filter mounting board has a rectangular shape and protrusions are provided at upper and lower ends thereof.

7. An electric power tool with dust collection function comprising:
a motor;
an intake fan for collecting dust particles configured to rotate by rotation of an output shaft of the motor; and
a dust collecting unit configured to accommodate a paper pack filter according to claim 1 or claim 3 and to store dust particles collected by the intake fan.

8. The electric power tool with dust collection function according to claim 7, wherein the dust collecting unit is a box-like member having one surface to which a dust collecting hose is connected, and other surfaces except the one surface provide an openable and closable lid member.

9. The electric power tool with dust collection function according to claim 8, wherein the lid member is provided on other surfaces adjacent to the one surface, and wherein when inner surfaces of the box-like member and the lid member are engaged with the paper filter mounting board and the lid member is closed, the through-opening of the paper filter mounting board is positioned opposite to a dust collecting hose connecting port formed in the one surface.
